# EUROPÄISCHE PATENTSCHRIFT

(11) **EP 0 821 161 B1**
(45) Veröffentlichungstag und Bekanntmachung des Hinweises auf die Patenterteilung: **17.05.2000**
(21) Anmeldenummer: 97112490.4
(22) Anmeldetag: 22.07.1997
(51) Int. Cl.: F03D 1/00, F03D 1/06, F03D 11/00

(54) **Windkraftanlage**
Wind turbine
Eolienne

(30) Priorität: 23.07.1996 DE 29612720 U
(43) Veröffentlichungstag der Anmeldung: 28.01.1998
(73) Patentinhaber: aerodyn Engineering GmbH, 24768 Rendsburg (DE)
(72) Erfinder: Siegfriedsen, Sönke, D-24811 Owschlag (DE)
(74) Vertreter: Biehl, Christian, Dipl.-Phys.

(56) Entgegenhaltungen:
- EP-A- 0 018 902
- AT-A- 382 689
- BE-A- 341 449
- DE-A- 2 838 239
- DE-A- 3 502 963
- FR-A- 2 467 304
- GB-A- 2 052 006
- US-A- 4 216 632

## Beschreibung

Die Erfindung betrifft eine Windkraftanlage nach dem Oberbegriff des Hauptanspruches.

Eine gattungsbildende Windkraftanlage ist dabei aus der AT 382 689 B bekannt, die mit einem Mast aus einer Tragstabkonstruktion mit mittig vergrößertem Durchmesser besteht, und bei der ein Rotor nach oben geneigt angeordnet ist. Dabei ist jedoch ein massives Drehlager am oberen Ende vorgesehen, das die Schrägstellung bewirkt. Insgesamt ist die Konstruktion im Kopfbereich zu schwer.

Weiter ist die DE 28 38 229 A1 zu nennen, in der ein abgespanntes Turmbauwerk beschreiben wird mit einem außem am Mast herauffahrbaren Turmkopf. An diesem Turmkopf ist der Rotor unter Freilassung eines Mittenbereiches, den der Turm beim Absenken des Turmkopfes einnimmt angeordnet. Die erzeugten Kippbelastungen werden nur unzureichend aufgefangen.

Bei Windkraftanlagen muß zudem zwischen dem Turm und den Rotorblättern ein Mindestabstand eingehalten werden, damit aerodynamische Wechselwirkungen oder gar Kollisionen zwischen den Rotorblättern und dem Turm vermieden werden. Dies wird üblicherweise dadurch bewirkt, daß die Nabe des Rotors ausreichend weit von dem Turm beabstandet angeordnet wird. Mit zunehmendem Abstand der Nabe von dem Turm nehmen aber die Biegemomente in der Gondelstruktur zu, die bei der Ableitung der auf den Rotor wirkenden Kräfte auf den Turm auftreten. Die kraftübertragenden Bauteile müssen daher entsprechend stark dimensioniert sein. Dies verteuert nicht nur diese Bauteile, sondern auch insbesondere den Turm, der diese schweren Teile tragen muß, erheblich.

Zudem ist es, wie beispielsweise in der DE 35 02 963 C2 dargestellt, üblich, die Rotorblätter in Windrichtung gegenüber der Senkrechten auf der Rotorwelle zu neigen, um eine Verminderung der Blattbiegemomente durch eine entlastende Wirkung der Zentrifugalkraft zu bewirken.

In den Schriften DE 28 23 525 B1, DE 28 25 061 A1 und DE 28 38 239 A1 wird dies bei einem sog. Leeläufer und bei einem mit Abspannungen gehaltenen Turm offenbart. Zudem sind in der dort beschriebenen Anordnung aufgrund der hohen Wechselwirkung mit der Nachschubströmung extrem hohe Abstände des Rotorblatts zum Turm zu realisieren.

Der Erfindung liegt die Aufgabe zugrunde, eine Windkraftanlage zu schaffen, bei der der Turmkopf gewichtssparend ausgebildet ist.

Erfindungsgemäß wird diese Aufgabe durch die Merkmale des Hauptanspruchs gelöst. Die Unteransprüche geben vorteilhafte Ausführungsformen wieder.

Zunächst sollte die Rotorwelle gegenüber der Horizontalen nach oben geneigt sein, die Längsachsen der Rotorblätter stumpfwinklig zu der Rotorwelle vom Turm weg geneigt sein und der Turmdurchmesser in seinem oberen Bereich sich aufweitend ausgebildet werden. In einer "Luvläufer"-Anordnung sind die Rotorblätter daher gegen den Wind geneigt. Dann sollte die Verkürzung der Baulänge weiter durch Anordnung der Massen innerhalb des Turmdurchmessergrenzen auf einer Dreipunktlagerung unter Verzicht auf einen Maschinenträger weiter vereinfacht und gewichtssparender ausgebildet sein.

Durch Gleitsegmente mit geringen Segmentlängen werden diese jeweils gleichmäßig über Ihren Flächen mit dem Anpressdruck beaufschlagt, so daß Ausführungen mit schweren die Last verteilenden Einrichtungen vermieden werden.

Die Neigung der Rotorwelle gegenüber der Horizontalen kann zwischen etwa 3° und 6° betragen, die Neigung der Längsachsen der Rotorblätter gegenüber der Senkrechten zur Rotorwelle zwischen etwa 2° und 4°.

Die beiden genannten Maßnahmen führen dazu, daß der Rotormittelpunkt dichter an die Turmachse geführt werden kann, und in Kombination mit der dritten Maßnahme, der Turmdurchmesservergrößerung nach oben dazu, daß sich die Turmwand direkt oder sehr dicht unterhalb der vorderen Rotorlagerung befindet, so daß Rotorlasten, die hauptsächlich vom vorderen Rotorlager aufgenommen werden, im wesentlichen als Normalkräfte mit kurzen Hebeln in die Turmwand geleitet werden.

Hierbei müssen gleichzeitig die Hebellängen auf der dem Rotor gegenüberliegenden Turmwandseite, so weit wie möglich reduziert werden, um weitere Vorteile von geringen Momenten, insbesondere nur geringen Biegemomenten und geringem Gewicht zu erhalten.

Insgesamt ermöglicht dies eine sehr kraftflußgerechte, leichte Konstruktion mit kurzen Kraftleitungswegen bei gleichzeitiger Realisierung eines günstigen Abstands zwischen Rotorblatt und Turm. Zudem wird die Herstellung dieser aufgrund des geringeren Gewichts schon erheblich kostengünstigeren Konstruktion erleichtert.

Die Erfindung wird im folgenden anhand von fünf Zeichnungen erläutert, in denen in
- Fig. 1: eine Windkraftanlage bei der die geometrischen Verhältnisse der Neigung der Rotorwelle und der Neigung der Rotorblätter schematisch dargestellt ist,
- Fig. 2: eine Seitenansicht des erfindungsgemäßen Gondelkopfes bei einer Anlage mit einem hochübersetzenden Getriebe mit schnellaufendem Generator,
- Fig. 3: eine Draufsicht auf die Gondellagerung nach Fig. 2,
- Fig. 4: eine Seiten- und teilweise Schnittansicht des Gondelkopfes einer Anlage mit einem einstufigen Planetengetriebe mit einem langsam laufenden Generator,
- Fig. 5: eine Drauf- und teilweise Schnittansicht auf die Gondellagerung nach Fig. 4.

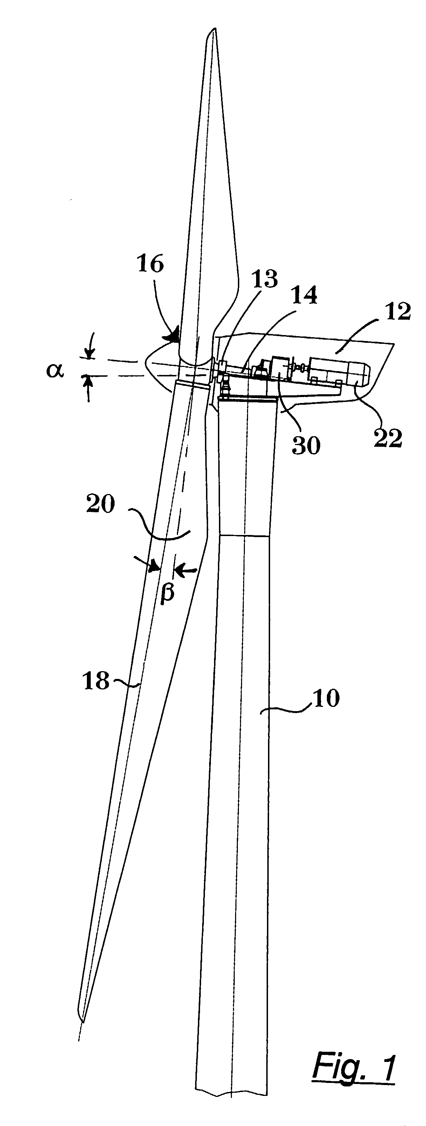

Die in der Fig. 1 dargestellte Windkraftanlage besteht aus einem Turm 10, einer auf das freie Ende des Turms 10 um eine vertikale Achse drehbar gelagerten Gondel 12, einer von der Gondel 12 in einem vorderen Lager 13 gelagerten Rotorwelle 14 und einem an die Rotorwelle 14 angesetztem, aus einer Mehrzahl von Rotorblättern bestehenden Rotor 16.

Die Rotorwelle 14 ist gegenüber der Horizontalen um einen Winkel α nach oben geneigt. Die Längsachsen 18 der Rotorblätter sind auf der Rotorwelle 14 gegenüber der Senkrechten auf der Rotorwelle vom Turm weg um einen Winkel β geneigt.

Der Turm, der von oben bis nahe an den Bereich der Gondel (vorzugsweise bis zu einer Höhe, an dem ein Bereich 20 mit jeweils der größten Blattiefe der Rotorblätter entlang dreht) vorzugsweise leicht verjüngend ausgebildet ist, ist in seinem oberen Bereich sich aufweitend ausgebildet, wodurch er sich dort, wo die Lasten eingeleitet werden, wieder an die Rotorblätter annähert.

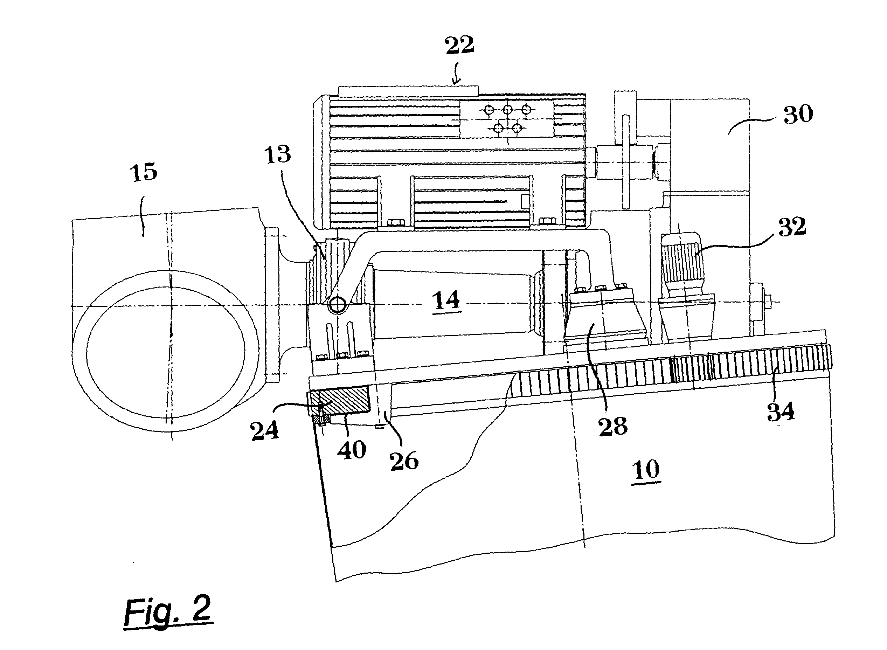

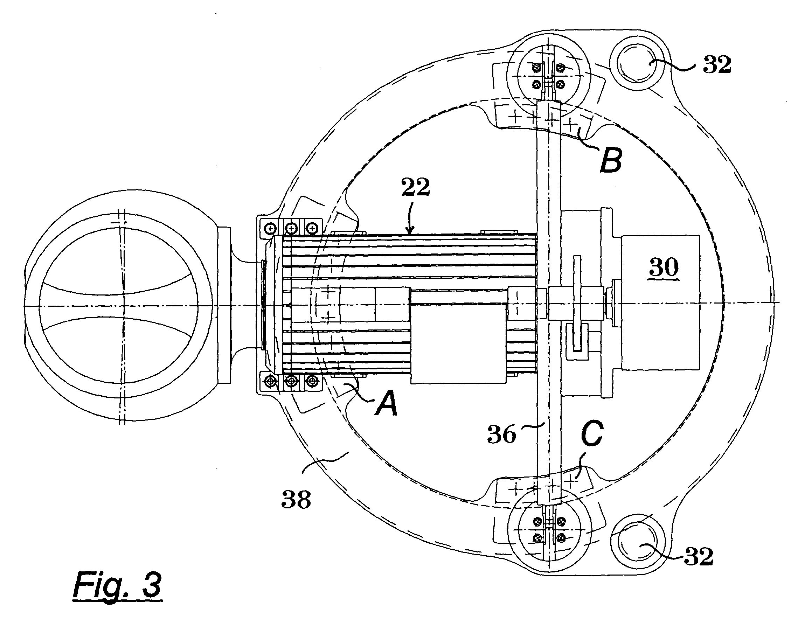

In der Fig. 2 ist nun erstes Ausführungsbeispiel eines Gondelkopfes auf einer Gondellagerung dargestellt, bei dem durch die erfinderischen Maßnahmen eine Gewichtseinsparung durch den Verzicht auf einen Maschinenträger realisiert ist. Die Übertragung aller Lasten, die vom Rotor her wirken und in den Turm eingeleitet werden müssen, wird hier auf drei Lastverteilungspunkte A, B, C (siehe Fig. 3) verteilt, die vorzugsweise eine flächenmäßige Ausdehnung haben, um die zulässigen Belastungen der Lagerelemente nicht zu überschreiten.

Vorzugsweise werden die Lagerelemente als Gleitelemente ausgeführt, es kann aber auch ein geeigneter Drehkranz Verwendung finden. Bei Verwendung einer Gleitlagerung wird der in der Fig. 2 dargestellte Gleitlagerflansch 24 an jedem Lasteinleitungspunkt von jeweils drei flächigen Gleitelementen 40 umgeben. Die Ausführung der Gleitlagerung in Form von Klauen 26 stellt hier die Führung der Gondel beim Halten und Nachführen sicher.

Das untere Gleitelement ist dabei in seiner Breite gegenüber der Oberseite verringert, da der Gleitlagerflansch 24 mit dem Außenbereich seiner Bodenseite auf die Endfläche des Turmflansches mit Bolzen angesetzt ist. Das vertikale Gleitelement zur radialen Führung kann alternativ auch durch je eine Führungsrolle gebildet werden.

Die drei Lasteinleitungspunkte werden direkt an den Bauelementen vorgesehen, so in der Fig. 2 und 3 bei einer Anlage mit einem hochübersetzenden Getriebe mit schnelllaufenden Generator direkt an der Rotorwelle 14 im Bereich des vorderen Rotorlagers 13, und in den hinteren Anbringungspunkten B und C über einen als Reaktionskraftstütze an dem Getriebe angeordnete Querflansch 36.

In dem dargestellten Fall der Fig. 2 sind zwischen dem Querflansch 36 und den beiden hinteren Lasteinleitungspunkten B und C noch Elastomerelemente 28 angeordnet, um an Standorten der Windkraftanlage die schallkritisch sind, eine Geräuschverminderung zu erreichen.

Zur Übertragung der Verstellkräfte der Azimutmotoren sollte ein Verbindungsring 38 die drei Krafteinleitungspunkte miteinander verbinden. Am Verbindungsring 38 werden in Randbereichen dann noch die Azimutantriebe 32 befestigt, die außen in eine Azimutverzahnung am Gleitlagerflansch 24 eingreifen. Vorteilhaft werden die hinter dem vorderen Rotorlager 13 befindlichen Einrichtungen innerhalb der Turmabmessungen des oberen Flansches angeordnet sein.

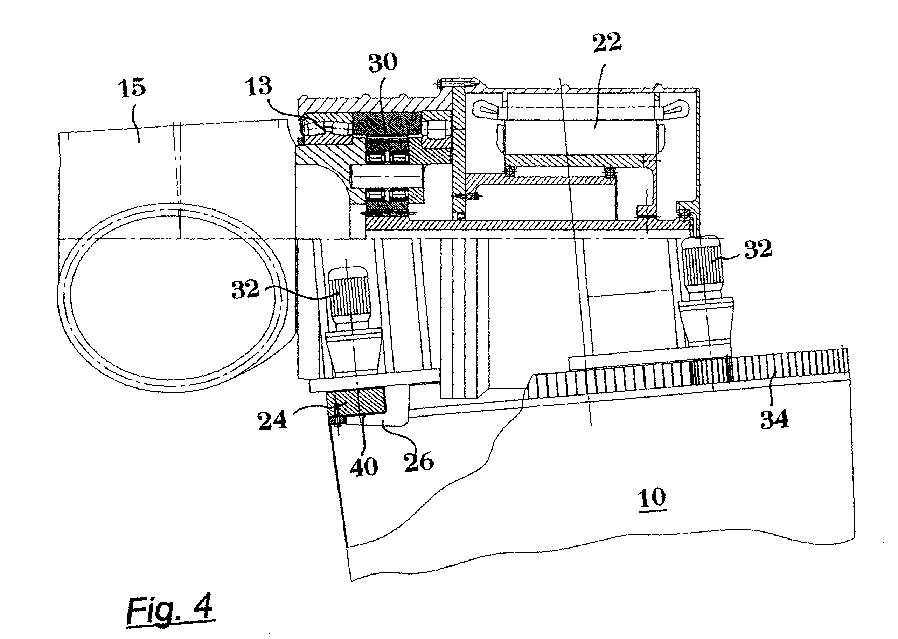

Diese Azimutantriebe, von denen in der Fig. 2 und 3 je zwei, in der Fig. 3 und 4 bei einer Anlage mit einem einstufigen Planetengetriebe vier vorgesehen werden, von denen zwei an den beiden Seiten des dem vorderen Lager zugeordneten Anbringungspunkt stehen in Turmrichtung parallel. Weiter ist in der Fig. 2 und auch in der Fig. 4 jeweils mit Bezugszeichen 15 die Rotornabe dargestellt.

Durch diese Ausführung werden die vom Rotor verursachten Lasten als Querkräfte auf kürzestem Weg in die Turmwandung eingeleitet. Dies ermöglicht es, auf schwere kraftübertragende Zwischenstücke zu verzichten, so daß ebenso wie durch die Neigung der Rotorwelle, die Wegneigung der Längsachsen der Rotorblätter vom Turm und die Aufweitung des Turms sich eine Möglichkeit der Gewichtseinsparung der Gondelkopfmasse ergibt.

Sinnvoll ist dabei, daß die eine Lagerstelle, die die Hauptkräfte aufnimmt, im Bereich unter dem vorderen Rotorlager 13 angeordnet wird. Die anderen Lagerstellen B, C werden sinnvollerweise symmetrisch zur Rotorwelle auf der gegenüberliegenden Seite der rotorseitigen Lagerstelle bezogen auf die Turmsymmetrieachse senkrecht zur Rotorwelle angeordnet.

Bei einer Ausführung mit Gleitelementen 40 unter den Lastübertragungspunkten ist die erforderliche Fläche unter der rotorseitigen Lagerstelle ca. doppelt so groß als die der beiden anderen Lagerstellen zu wählen.

Im vorliegenden Beispiel läßt sich eine Gewichtseinsparung der Gondelkopfmasse um 10 - 15 % realisieren.

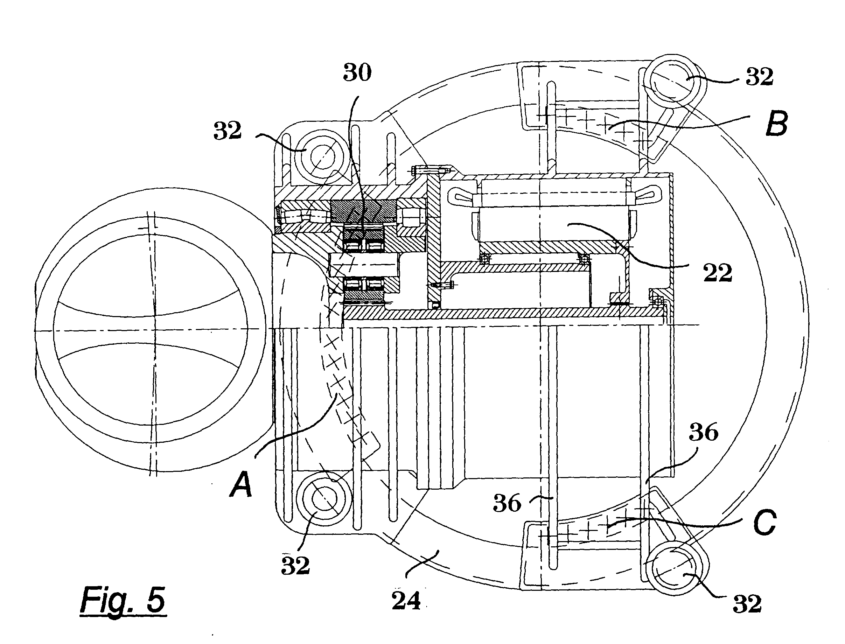

In der Fig. 4 und 5 ist bei Verzicht auf ein hochübersetzendes Getriebe mit einem schnell laufenden Generator eine noch kompaktere Bauweise möglich. Dennoch wird sich auch in diesem Beispiel die erfindungsgemäß vorteilhafte Gewichtsreduktion einstellen. Da hier ein Getriebe 30 vor dem Generator 22 liegt, kann die Baulänge weiter begrenzt werden.

Als Reaktionskraftstützen bieten sich an dem Generator integrierte Querflansche 36 (bevorzugt zwei auf jeder Seite) an. Ein Maschinenträger, das in herkömmlichen Windkraftanlagen mit horizontaler Drehachse zwischen Rotorlagerung und Turmkopflagerung vorhandene separate Bauteil als Verbindungselement zur Lastübertragung aus dem Rotor in den Turm wird wieder nicht benötigt, so daß wiederum erhebliche Gewichts- und Kostennachteile vermieden werden.

## Patentansprüche

1. Windkraftanlage mit einem Turm (10), einer kraftumsetzenden, aus einem Generator (22) und einem Getriebe (30) bestehenden Einrichtung und einem Rotorwellenlager (13),
- einer auf dem oberen Ende des Turms (10) um eine vertikale Achse auf einer Turmlagerung drehbar gelagerten Gondel (12),
- einer in der Gondel (12) über ein vorderes Rotorwellenlager (13) gelagerten Rotorwelle (14), und
- einem an die Rotorwelle (14) angesetzten, aus einer Mehrzahl von Rotorblättern bestehenden Rotor (16),
wobei die Rotorwelle (14) gegenüber der Horizontalen um einen Winkel α nach oben geneigt ist, und der Rotor (16) als "Luvläufer" ausgebildet ist, wobei Längsachsen (18) der Rotorblätter stumpfwinklig zu der Rotorwelle (14) vom Turm (10) weg geneigt sind,
dadurch gekennzeichnet, daß
- der Turm (10) in seinem oberen Bereich sich aufweitend ausgebildet ist, wobei die nach oben vorgesehene Aufweitung des Turms (10) in der Höhe der größten Blattiefe eines senkrecht nach unten stehenden Blattes beginnt,
- die Außenseite des vorderen Rotorwellenlagers (13), und zwei distale Endbereiche der kraftumsetzenden Einrichtung (22, 30) jeweils mit Gleitsegmenten auf einem Gleitlagerflansch (24) die Befestigung der Gondel auf dem Turm (10) bilden,
wobei die Gleitsegmente als Gleitlagerklauen (26) mit zwei horizontalen Gleitflächen (40) über Elastomerelemente (28) angesetzt sind.

2. Windkraftanlage nach Anspruch 1, dadurch gekennzeichnet, daß die hinter dem vorderen Rotorlager (13) befindlichen Einrichtungen innerhalb der Turmabmessungen des oberen Flansches angeordnet sind.

3. Windkraftanlage nach einem der vorangehenden Ansprüche, dadurch gekennzeichnet, daß die Rotorwelle (14) gegenüber der Horizontalen um etwa 3° bis 6° nach oben geneigt ist.

4. Windkraftanlage nach einem der vorangehenden Ansprüche, dadurch gekennzeichnet, daß die Längsachsen (18) der Rotorblätter gegenüber der Senkrechten zur Rotorwelle um etwa 2° bis 4° weg geneigt ist.

5. Windkraftanlage nach einem der vorangehenden Ansprüche, dadurch gekennzeichnet, daß wenigstens eine Reaktionskraftstütze (36) im distalen Endbereich rechtwinklig zur Rotorwelle (14) vorgesehen ist.

## Claims

1. Wind power plant with a tower (10), a force-transforming device comprising a generator (22) and a gear (30), as well as a rotor shaft bearing (13),
- a gondola (12) mounted in rotary manner about a vertical axis on a tower bearing at the upper end of the tower (10),
- a rotor shaft (14) mounted in the gondola (12) by means of a front rotor shaft bearing (13) and
- a rotor (16) comprising a plurality of rotor blades attached to the rotor shaft (14),
in which the rotor shaft (14) is upwardly inclined with respect to the horizontal by an angle α and the rotor (16) is constructed as a luff rotor, in which the longitudinal axes (18) of the rotor blades are inclined at an obtuse angle to the rotor shaft (14) away from the tower (10),
characterized in that
- the upper area of the tower (10) is widened and the upward widening of the tower (10) starts level with the greatest blade chord of a vertically downwardly directed blade,
- the outside of the front rotor shaft bearing (13) and two distal end regions of the force-transforming device (22, 30), in each case with sliding segments on a plain bearing flange (24) form the fixing of the gondola to the tower (10),
- in which the sliding segments are attached as plain bearing claws (26) with two horizontal sliding surfaces (40) by means of elastomer elements (28).

2. Wind power plant according to claim 1, characterized in that the devices located behind the front rotor bearings (13) are located within the tower dimensions of the upper flange.

3. Wind power plant according to one of the preceding claims, characterized in that the rotor shaft (14) is upwardly inclined with respect to the horizontal by approximately 3 to 6°.

4. Wind power plant according to one of the preceding claims, characterized in that the longitudinal axes (18) of the rotor blades are inclined away from the perpendicular to the rotor shaft by approximately 2 to 4°.

5. Wind power plant according to one of the preceding claims, characterized in that at least one torque support (36) is provided in the distal end region at right angles to the rotor shaft (14).

## Revendications

1. Eolienne comportant une tour (10), un dispositif convertisseur de force constitué d'une génératrice (22) et d'un engrenage (30), et un palier d'arbre de rotor (13),
- une nacelle (12) montée tournante autour d'un axe vertical sur un appui de tour sur l'extrémité supérieure de la tour (10),
- un arbre de rotor (14) monté dans la nacelle (12) par l'intermédiaire d'un palier avant (13), et
- un rotor (16) constitué de plusieurs pales monté sur l'arbre de rotor (14),
l'arbre de rotor (14) étant incliné d'un angle α vers le haut par rapport à l'horizontale et le rotor (16) est un rotor Luv, les axes longitudinaux (18) des pales du rotor étant inclinés d'un angle obtus par rapport à l'arbre de rotor (14) de façon à s'éloigner de la tour (10),
caractérisée par le fait que
- la tour (10) s'élargit dans sa partie supérieure, l'élargissement prévu vers le haut de la tour (10) commençant à la hauteur de la plus grande profondeur d'une pale dirigée verticalement vers le bas,
- le côté extérieur du palier avant d'arbre de rotor (13) et deux parties d'extrémité distales du dispositif convertisseur de force (22, 30) forment chacun, avec des segments de glissement sur une bride de palier à glissement (24), la fixation de la nacelle sur la tour (10), les segments de glissement, formés de griffes de palier à glissement (26) à deux surfaces horizontales de glissement (40), étant montés par l'intermédiaire d'éléments en élastomère (28).

2. Eolienne selon la revendication 1, caractérisée par le fait que les dispositifs situés derrière le palier de rotor avant (13) sont placés à l'intérieur des dimensions sur la tour de la bride supérieure.

3. Eolienne selon l'une des revendications précédentes, caractérisée par le fait que l'arbre de rotor (14) est incliné d'environ 3° à 6° vers le haut par rapport à l'horizontale.

4. Eolienne selon l'une des revendications précédentes, caractérisée par le fait que les axes longitudinaux (18) des pales du rotor sont inclinés d'environ 2° à 4° vers l'extérieur par rapport à la perpendiculaire à l'arbre de rotor.

5. Eolienne selon l'une des revendications précédentes, caractérisée par le fait qu'au moins un support de réaction (36) est prévu dans la partie d'extrémité distale perpendiculairement à l'arbre de rotor (14)..
